# EUROPEAN PATENT APPLICATION

(11) **EP 4 528 910 A1**
(43) Date of publication of application: **26.03.2025**
(21) Application number: 23866976.6
(22) Date of filing: 05.06.2023
(51) Int. Cl.: H01M 50/531, H01M 4/64

(54) **BATTERY ELECTRODE SHEET, BATTERY CELL AND BATTERY**

(30) Priority: 19.09.2022 CN 202222476492 U; 19.09.2022 CN 202222494345 U
(71) Applicant: Zhuhai CosMX Battery Co., Ltd., Zhuhai, Guangdong 519180 (CN)
(72) Inventor: ZHOU, Qiao, Zhuhai, Guangdong 519180 (CN); WEI, Fenchong, Zhuhai, Guangdong 519180 (CN); XIE, Jichun, Zhuhai, Guangdong 519180 (CN)
(74) Representative: Murgitroyd & Company
(86) International application number: PCT/CN2023/098314
(87) International publication number: WO 2024/060680

(57) **Abstract**

**In** the present application, an electrode plate of a battery, a battery cell and a battery are provided. The electrode plate of the battery includes an active material coating region and a tab, the tab includes a foil uncoating region, and the active material coating region includes a current collector and an active material layer provided on the current collector; and the foil uncoating region includes three outer sides, a second treating area is provided at an edge of at least one of the three outer sides, and a thickness of the second treating area is greater than or equal to a thickness of other areas, excluding the second treating area, of the foil uncoating region. The tab of the electrode plate of the battery has an increased strength, thereby eliminating a hidden factor of causing failure of a battery due to warping of a tab, and thus solving a problem of causing failure of a battery cell or affecting an electrochemical quality of a battery due to insufficient strength of a tab to fold or warp in the related technologies, and significantly improving an electrochemical quality and safety of a battery.

## Description

### TECHNICAL FIELD

The present application relates to the field of battery technologies, and in particular, to an electrode plate of a battery, a battery cell and a battery.

### BACKGROUND

A battery cell of a battery is formed by stacking or winding an electrode plate. The electrode plate includes an active material coating region and a tab. The active material coating region includes a current collector and an active material layer coated on the current collector, and the tab is generally formed by a foil region uncoated with active material (i.e. a foil uncoating region). Generally, the electrode plate is manufactured by cutting a metal foil in a preset shape using a metal cutting device. However, after die-cut forming, the tab is prone to folding or warping, and these factors may affect an electrochemical quality of the battery and increase a risk of failure of the battery.

### SUMMARY

In view of this, embodiments of the present application aim to provide an electrode plate of a battery, to solve a problem of causing failure of a battery due to folding, warping or other phenomenon of a tab in the related technologies.

In an aspect of the present application, an electrode plate of a battery is provided, including: an active material coating region and a tab, the tab includes a foil uncoating region, and the active material coating region includes a current collector and an active material layer provided on the current collector; and the foil uncoating region includes three outer sides, a second treating area is provided at an edge of at least one of the three outer sides, and a thickness of the second treating area is greater than or equal to a thickness of other areas, excluding the second treating area, of the foil uncoating region.

In a possible implementation, the tab further includes a coating transition region having an active material layer connected to the active material coating region; and a first treating area is provided at an edge of a side of the coating transition region, a thickness of a current collector in the first treating area is greater than or equal to a thickness of a current collector in other areas, excluding the first treating area, of the coating transition region, and the second treating area is connected to the first treating area.

In a possible implementation, in a direction from the coating transition region to the foil uncoating region, a width of the first treating area gradually increases.

In a possible implementation, the coating transition region is further provided with a first influencing area on an inner side of the first treating area, and the first influencing area is an inactive area.

In a possible implementation, the foil uncoating region is further provided with a second influencing area on an inner side of the second treating area, and the thickness of the second treating area is greater than or equal to a thickness of the second influencing area.

In a possible implementation, a width of the first treating area is less than or equal to 100 µm.

In a possible implementation, a width of the first influencing area is less than or equal to 100 µm.

In a possible implementation, a width of the second treating area is greater than a width of the first treating area.

In a possible implementation, a width of the second influencing area is greater than a width of the first influencing area.

In a possible implementation, a width of the second treating area is less than or equal to 150 µm.

In a possible implementation, a width of the second influencing area is less than or equal to 100 µm.

In a possible implementation, the thickness of the second treating area is greater than or equal to a thickness of the first treating area.

In a possible implementation, a thickness at a junction between the first treating area and the second treating area is greater than or equal to the thickness of the second treating area.

In a possible implementation, a thickness of the first treating area is greater than an average thickness of the current collectors of the electrode plate of the battery, and is less than or equal to 1.08 times the average thickness of the current collectors of the electrode plate of the battery.

In a possible implementation, a thickness at a junction between the first treating area and the second treating area is greater than or equal to 1.01 times an average thickness of the current collectors of the electrode plate of the battery, and is less than or equal to 1.15 times the average thickness of the current collectors of the electrode plate of the battery.

In a possible implementation, a thickness of the first treating area is greater than an average thickness of the current collectors of the electrode plate of the battery, and is less than or equal to the thickness of the second treating area, and a thickness at a junction between the first treating area and the second treating area is greater than or equal to the thickness of the second treating area, and is less than or equal to 1.2 times the average thickness of the current collectors of the electrode plate of the battery.

In a possible implementation, an average thickness of the current collectors of the electrode plate of the battery is less than or equal to 50 µm.

In a possible implementation, the first treating area is provided therein with a melted bead having a diameter less than or equal to 45 µm.

In a possible implementation, the second treating area is provided at the edge of each of the three outer sides.

In a possible implementation, the tab includes a first foil face, a second foil face, and a side surface extending in a thickness direction, and the second treating area includes an area extending along the first foil face, an area extending along the second foil face, and an area extending along the side surface.

In a possible implementation, the thickness of the second treating area is 1 to 3 times the thickness of the other areas, excluding the second treating area, of the foil uncoating region.

In a possible implementation, the thickness of the second treating area ranges from 30 µm to 100 µm.

In a possible implementation, a third treating area is provided at an edge of an outer side of the active material coating region, and the third treating area is an inactive area.

In a possible implementation, a foil of the electrode plate of the battery is Al or Cu.

In another aspect of the present application, an electrode plate of a battery is further provided, including an active material coating region and a tab, the tab includes a coating transition region and a foil uncoating region, and the active material coating region includes a current collector and an active material layer provided on the current collector; the coating transition region includes an active material layer connected to the active material coating region; and a first treating area is provided at an edge of a side of the coating transition region, a thickness of a current collector in the first treating area is greater than or equal to a thickness of a current collector in other areas, excluding the first treating area, of the coating transition region, and in a direction from the coating transition region to the foil uncoating region, a width of the first treating area gradually increases.

In another aspect of the present application, a battery cell is further provided, including the electrode plate of the battery according to any one as described above.

In another aspect of the present application, a battery is further provided, including the battery cell described above.

According to the electrode plate of the battery as provided in the present application, the tab is provided thereon with the foil uncoating region, and the second treating area is provided at the edge of the outer side of the foil uncoating region. The thickness of the second treating area is greater than or equal to the thickness of the other areas, excluding the second treating area, of the foil uncoating region. The second treating area extends along the outer side of the foil uncoating region, so as to form a hard edge of the tab, so that a strength and a hardness of the edge of the tab are significantly improved, thereby effectively preventing a tab, in a manufacturing process of a battery after die-cut forming, from folding or warping or the like, and thus effectively preventing a hidden danger of causing failure of a battery due to folding or warping of a tab, improving safety of a battery and also improving a quality of a battery.

### BRIEF DESCRIPTION OF THE DRAWINGS

FIG. 1 shows a top view of an electrode plate of a battery in an embodiment of the present application.
FIG. 2 shows a side view of an electrode plate of a battery in an embodiment of the present application in a direction.
FIG. 3 shows a top view of an electrode plate of a battery in an embodiment of the present application.
FIG. 4 shows a side view of a tab in an embodiment of the present application in another direction.
FIG. 5 shows a surface topographic view of a tab under a first magnification of a microscope.
FIG. 6 shows a surface topographic view of a tab under a second magnification of a microscope.
FIG. 7 shows a top view of an electrode plate of a battery in an embodiment of the present application.
FIG. 8 shows a side view of an electrode plate of a battery in an embodiment of the present application in the direction shown in FIG. 2.
FIG. 9 shows a surface topographic view of a tab under a microscope.

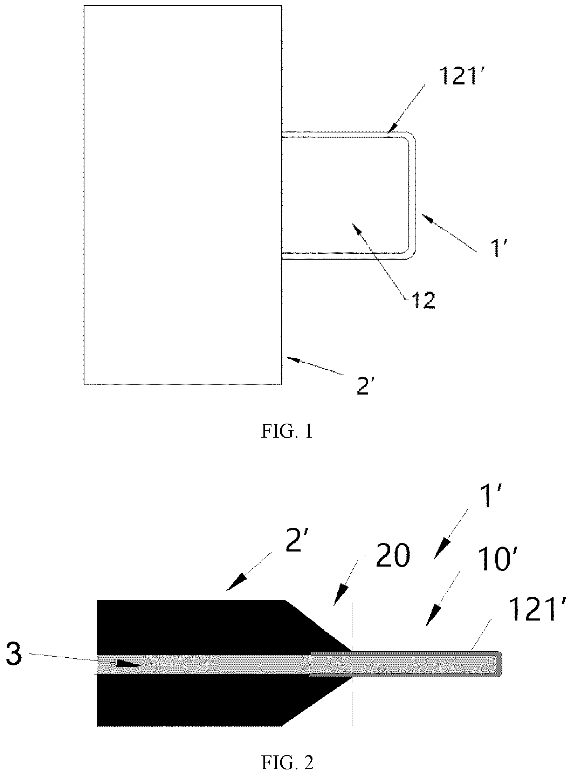

As for FIG. 1 to FIG. 6, reference numerals therein include:
1'. tab; 10'. foil uncoating region; 20. coating transition region; 121'. second treating area; 12. other areas, excluding second treating area, of foil uncoating region; 13. first treating area; 2'. active material coating region; and 3. foil.

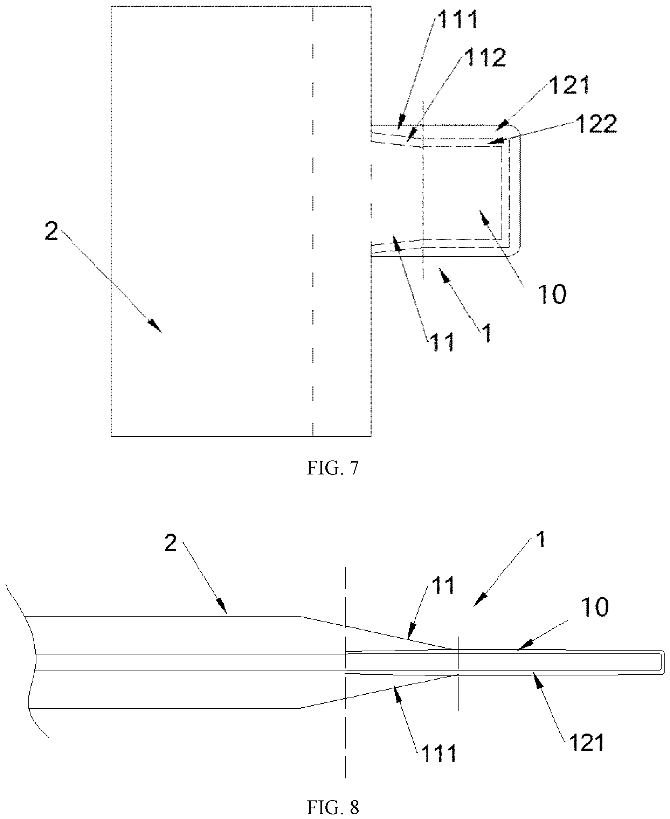

As for FIG. 7 to FIG. 9, reference numerals therein include:
1. tab; 11. coating transition region; 111. first treating area; 112. first influencing area; 10. foil uncoating region; 121. second treating area; 122. second influencing area; and 2: active material coating region.

### DETAILED DESCRIPTION OF THE EMBODIMENTS

Hereinafter, the technical solutions in the embodiments of the present application may be described clearly and completely in combination with the accompanying drawings in the embodiments of the present application. Apparently, the described embodiments are some embodiments of the present application, rather than all embodiments. Based on the embodiments in the present application, any other embodiments obtained by a person skilled in the art without inventive work are within the protection scope of the present application.

In the related technologies, an electrode plate is manufactured by cutting a metal foil in a preset shape using a metal cutting device. However, as a tab is light, thin and soft, with a relatively low strength, the tab is prone to folding or warping after die-cut forming, and these factors may affect an electrochemical quality of a battery and increase a risk of failure of a battery.

Hereinafter, in combination with FIG. 1 to FIG. 6, an electrode plate of a battery as provided in some embodiments of the present application is described.

As shown in FIG. 1 to FIG. 3, the electrode plate of the battery includes a tab 1' and an active material coating region 2'. The active material coating region 2' is coated thereon with an active material layer. A side of the tab 1' is connected to the active material coating region 2', and therefore, the tab 1' exposes three outer sides around its circumferential direction. The tab 1' includes a foil uncoating region 10', and the foil uncoating region 10' refers to a region on a foil where there is no active material layer present on a current collector. The current collector in the foil uncoating region 10' is formed by the foil, and therefore, the foil uncoating region 10' may also be considered as being formed by the foil.

As shown in FIG. 1, all regions of the tab 1' may be the foil uncoating region. Or, as shown in FIG. 2, a portion of the regions of the tab 1' is the foil uncoating region 10', and another portion of the regions is a coating transition region 20 which has an active material layer connected to the active material coating region 2'.

The foil uncoating region 10' includes three outer sides (referring to sides that are exposed and not connected to other components, ditto hereinafter). In the three outer sides of the foil uncoating region 10', a second treating area 121' is provided at an edge of at least one of the outer sides, and a thickness of the second treating area 121' is greater than or equal to a thickness of other areas 12, excluding the second treating area 121', of the foil uncoating region 10', i.e., the second treating area 121' is a hard edge area.

In some embodiments, the second treating area 121' is provided at the edge of each of the three outer sides. As shown in FIG. 1, the second treating area 121' extends along the outer side of the tab 1' and forms a hard edge of the tab 1' having a relatively high hardness, which not only significantly improves a strength and a hardness of the edge of the tab 1', but also improves a whole strength and a whole hardness of the tab 1' to a certain extent, thereby effectively preventing the tab 1', in a manufacturing process of a battery after die-cut forming, from folding or warping or the like, and thus effectively preventing a hidden danger of causing failure of a battery due to folding or warping of the tab 1', improving safety of a battery and also improving a quality (such as an electrochemical quality) of a battery.

As can be seen, adopting the electrode plate of the battery as provided in the embodiments eliminates a hidden factor of causing failure of a battery due to insufficient strength of the tab 1' to warp, thereby solving a problem of causing failure of a battery cell or affecting an electrochemical quality of a battery due to insufficient strength of a tab to fold or warp in the related technologies, and thus significantly improving an electrochemical quality and safety of a battery. In addition, only the thickness of the second treating area 121' at the edge of the tab 1' is increased, rather than increasing a thickness of the whole tab 1', which may avoid too much influence on a cost, processing and current collection performance of an electrode plate of a battery.

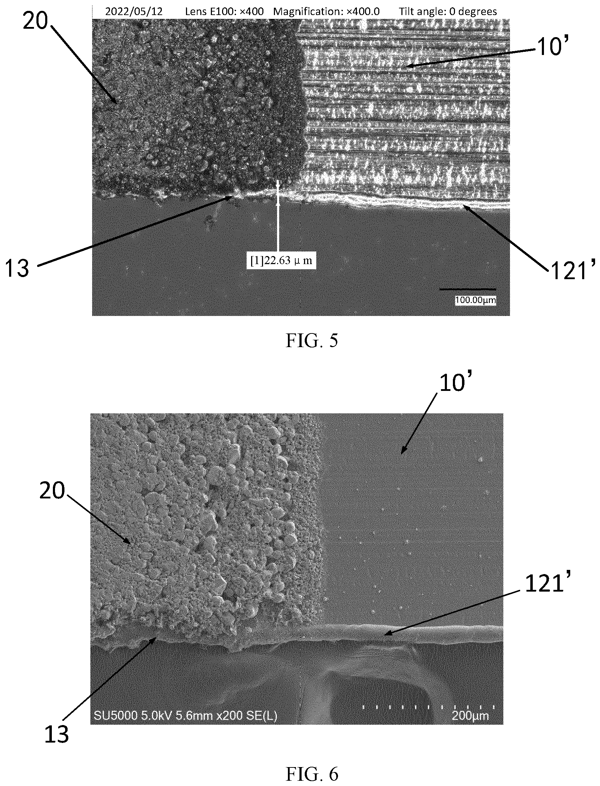

In an embodiment, the second treating area 121' is an area formed after the edge is melted and then solidifies into shape, i.e. a melted area, or the second treating area 121' is a sintered area, such as a sintered edge formed by laser-cutting a foil, or a melted edge formed due to influence at a high temperature. In other words, the melted edge or the sintered edge is formed on the tab 1'. As shown in FIG. 5 and FIG. 6, in the second treating area 121', there is no sharp or relatively long burr, or even there is substantially no burr, thereby significantly preventing burrs from forming on the edge of the tab 1'. There is substantially no burr on the edges of the three outer sides of the tab 1', thereby effectively preventing a hidden danger of causing failure of a battery due to burrs piercing a separator of a battery, and providing guarantee for improving a use quality and use performance of a battery.

The second treating area 121' extends along the edge of the tab 1', which forms a hard edge of the tab 1', and the hard edge is formed by the foil 3 at the edge of the tab 1' after melting and then solidifying into shape or is formed by the foil 3 at the edge of the tab 1' after sintering. In other words, the second treating area 121' has undergone a quenching process, so that a strength and a hardness of the second treating area 121' are significantly improved. In addition, the thickness of the second treating area 121' is greater than the thickness of the other areas 12 of the foil uncoating region 10', so that the edge of the tab 1' is the hard edge with hardness and strength greater than those of the other areas 12 of the foil uncoating region 10', thereby significantly improving a strength of the tab 1' itself and significantly eliminating phenomenon of folding or warping of the tab 1'.

Certainly, in other embodiments, the second treating area 121' may be formed by other formation manners. For example, after the tab 1' and the active material coating region 2' have been die-cut and formed, the edge of the tab 1' is heated at a high temperature to melt an edge area of the tab 1', and then the edge area cools and solidifies to form the second treating area 121'; or the second treating area 121' may also be formed by sintering the edge of the tab 1'.

As shown in FIG. 1 to FIG. 3, the tab 1' includes a first foil face, a second foil face and a side surface. The side surface refers to a surface that extends along a thickness direction and is located between the first foil face and the second foil face. The second treating area 121' and the other areas 12 of the foil uncoating region 10' are formed as an integral structure. The second treating area 121' includes an area extending along the first foil face, an area extending along the second foil face and an area extending along the side surface.

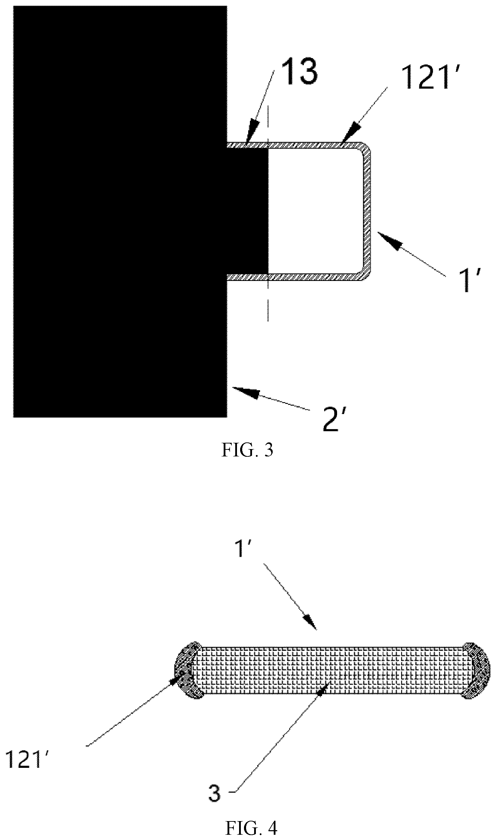

As the second treating area 121' is not thinner than the other areas 12 of foil uncoating region 10', as shown in FIG. 4, the second treating area 121' is wrapped around an edge of the other areas 12 (i.e. corresponding to the position of the foil 3 in FIG. 4) of the foil uncoating region 10', i.e., an upper surface of the second treating area 121' exceeds beyond a foil face (referring to the first foil face) of the other areas 12 of the foil uncoating region 10', and a lower surface of the second treating area 121' exceeds beyond a foil face (referring to the second foil face) of the other areas 12 of the foil uncoating region 10'.

The thickness of the second treating area 121' is greater than or equal to the thickness of the other areas 12 of the foil uncoating region 10'. In some embodiments, the thickness of the second treating area 121' is 1 to 3 times the thickness of the other areas 12 of the foil uncoating region 10', and a maximum thickness of the second treating area 121' may be 3 times the thickness of the other areas 12 of the foil uncoating region 10'.

Regarding specific examples with numerical values, in some embodiments, the thickness of the second treating area 121' ranges from 30 µmto 100 µm, and specifically may be 30 µm, 40 µm, 50 µm, 60 µm, 65 µm, 70 µm, 75 µm, 80 µm, 85 µm, 90 µm, 95 µm, or 100 µm. In some embodiments, a width of the second treating area 121' (the width referring to a dimension in a direction from outside of an edge to inside of the edge, ditto hereinafter) ranges from 30 µm to 150 µm, and specifically may be 30 µm, 40 µm, 50 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, or 150 µm.

In some embodiments, as shown in FIG. 1, the whole tab 1' is formed by the foil uncoating region 10'. As shown in FIG. 2, in some other embodiments, the tab 1' is further provided thereon with a coating transition region 20. The coating transition region 20 is provided on a side, connected to the active material coating region 2', of the tab 1'. A foil in the coating transition region 20 is provided thereon with an active material layer, and the active material layer in the coating transition region 20 is connected to an active material layer in the active material coating region 2'. As shown in FIG. 3, the coating transition region 20 includes two outer sides, and a first treating area 13 is provided at an edge of each of the two outer sides. A thickness of a current collector in the first treating area 13 is greater than or equal to a thickness of a current collector in other areas, excluding the first treating area 13, of the coating transition region 20. The first treating area 13 is connected to the second treating area 121'. The first treating area 13 is also an inactive area, i.e. an area where an active material layer cannot conduct electricity effectively.

The first treating area 13 is connected to the second treating area 121' on the side of the tab 1'. Thus, the whole edge of the tab 1' is a hard edge. The first treating area 13 may be formed by the same process as that of the second treating area 121', i.e., the first treating area 13 may also be a sintered edge or a melted edge. As shown in FIG. 5 and FIG. 6, in the first treating area 13, there is no sharp or relatively long burr, or even there is substantially no burr, thereby significantly preventing burrs from forming on the edge of the tab 1', and thus effectively preventing a hidden danger of causing failure of a battery due to burrs piercing a separator of a battery, and providing guarantee for improving a use quality and use performance of a battery.

The thickness of the current collector in the first treating area 13 ranges from 30 µm to 100 µm, and a width of the first treating area 13 ranges from 30 µm to 150 µm. The width of the first treating area 13 is less than or equal to a width of the second treating area 121'.

The active material coating region 2' is located on a side of the tab 1'. The active material coating region 2' includes a current collector and an active material layer coated on the current collector. A third treating area is provided at an edge of an outer side of the active material coating region 2', and the third treating area is an inactive area, i.e. an area that cannot conduct electricity effectively. As the third treating area may also be a sintered area, a thickness of a current collector in the third treating area is greater than a thickness of a current collector in other areas, excluding the third treating area, of the active material coating region 2'. In addition, the edge of the tab is provided with the first treating area 13 and the second treating area 121', so that strengths of edges of all outer sides of the electrode plate of the battery are enhanced, thereby improving a whole strength, a damage resistance ability and an impact resistance ability of an electrode plate, and thus better ensuring a use quality and use safety of a battery.

A width and a thickness of the third treating area may be within the above-described width range and the above-described thickness range of the second treating area 121', or may be within other numerical ranges.

As the third treating area may also be a melted and solidified area, or a sintered area, there is substantially no burr on an edge of the third treating area. Therefore, there is substantially no burr on the edge of the whole electrode plate of the battery, thereby ensuring safety of a battery more reliably.

A foil 3 of the electrode plate of the battery is Al or Cu. For example, the foil 3 is Al, the electrode plate of the battery may be a positive electrode plate, and the tab 1' is a positive tab. In another example, the foil 3 is Cu, the electrode plate of the battery may be a negative electrode plate, and the tab 1' is a negative tab. Certainly, in other embodiments, the foil 3 of the electrode plate of the battery may be other metal foils, such as stainless steel plated on its surface with C, Ni, Ti or Ag, or Al-Cd alloy plated on its surface with C, Ni, Ti or Ag, etc.

In another embodiment of the present application, a battery cell is further provided. The battery cell includes an electrode plate of a battery. The battery cell may be formed by winding an electrode plate of a battery or may be formed by stacking electrode plates of a battery. The electrode plate of the battery is the electrode plate of the battery as described in the above embodiments. There is substantially no burr on the edge of the tab 1' of the battery cell or on the edge of the whole electrode plate of the battery, and the edge of the tab 1' of the battery cell or the edge of the whole electrode plate of the battery has an enhanced strength, thereby reducing a risk of failure of a battery, and thus improving an electrochemical quality and use safety of a battery.

In another embodiment of the present application, a battery is further provided, including the battery cell in the above embodiments, or including the electrode plate of the battery in the above embodiments. Compared with adopting the batteries in the related technologies, adopting the battery reduces a risk of failure and eliminates a hidden factor of affecting a quality of a battery or causing failure of a battery due to burrs piercing a separator of a battery and folding of the tab 1', thereby improving an electrochemical quality and use safety. The conclusion process for the beneficial effects of the above battery cell and the above battery is substantially same as that of the above electrode plate of the battery, and may not be repeated any more.

Hereinafter, in combination with FIG. 7 to FIG. 9, an electrode plate of a battery as provided in some other embodiments of the present application is described.

In the related technologies, an active material coating region includes a current collector and an active material layer coated on the current collector, and the tab is generally formed by a foil region uncoated with active material (i.e. a foil uncoating region), which results in a difference in stresses on the active material coating region and on the tab, i.e. a difference in strengths. Therefore, there is a sudden change in stress at a junction between the active material coating region and the tab. Due to a significant difference in strengths between the two regions, coupled with thin, soft, and low-strength nature of the tab, the tab is prone to wrinkling or even cracking at the junction during a rolling process (with a high rolling pressure in such process due to a high stress of the active material coating region) following cutting and shaping of the electrode plate, which decreases a quality of a battery and also affects use safety performance of a battery.

As shown in FIG. 7 and FIG. 8, the electrode plate of the battery includes an active material coating region 2 and a tab 1, the tab 1 includes a coating transition region 11 and a foil uncoating region 10, the active material coating region 2 is formed by a region of the electrode plate having an active material layer, and the active material coating region 2 includes a current collector in the active material coating region 2 and an active material layer coated on the current collector.

Generally, the tab 1 is formed by a foil uncoating region 10 on a side of the active material coating region 2. The foil uncoating region 10 refers to a region where there is no active material layer present on a current collector, and is also a foil region. However, in the embodiments, a coating transition region 11 is formed at a junction between the tab 1 and the active material coating region 2. The coating transition region 11 is located between the active material coating region 2 and the foil uncoating region 10, protrudes from the active material coating region 2 towards a side close to the tab 1, and is formed at an end, connected to the active material coating region 2, of the tab 1. A current collector in the coating transition region 11 is provided thereon with an active material layer, and therefore, an active material layer is also provided on an end, connected to the active material coating region 2, of the tab 1 (i.e. at the junction between the tab 1 and the active material coating region 2), thereby enhancing a whole strength of the coating transition region 11, i.e. enhancing a strength at the junction between the tab 1 and the active material coating region 2.

A side of the coating transition region 11 is provided, at an edge thereof, with a treating area, denoted as a first treating area 111. The side of the coating transition region 11 refers to a side extending along a direction from the active material coating region 2 to the tab 1, or a side at the junction, or a side of the end, connected to the active material coating region 2, of the tab 1. A thickness of a current collector in the first treating area 111 is greater than or equal to a thickness of a current collector in other areas of the coating transition region 11 (i.e. the thickness of the current collector in an area on an inner side of the first treating area 111).

In other words, with respect to the other areas of the coating transition region 11, the first treating area 111 has an increased thickness. The thickness of the first treating area 111 is not less than the thickness of the other areas (in a shape of thin sheet) on an inner side of an edge (i.e. the inner side in a direction from outside of the edge to inside of the edge, ditto hereinafter), so that the junction between the tab 1 and the active material coating region 2 (i.e. an edge of a connection end of the tab 1) has a hard edge with hardness and strength greater than those of the other areas on the inner side of the edge, thereby significantly improving a hardness and a strength at the junction between the tab 1 and the active material coating region 2.

In addition, in a direction from the coating transition region 1 1 to the foil uncoating region 10, a width of the first treating area 111 (the width referring to a dimension in a direction from outside of an edge to inside of the edge, ditto hereinafter) gradually increases, i.e., in an edge area where a strength and a hardness are enhanced, the closer to the foil uncoating region 10, the greater the width, so that a difference in stresses on the active material coating region 2 and on the tab 1, and a degree of a sudden change in strength at the junction between the active material coating region 2 and the tab 1 are significantly decreased. As a result, in the direction from the active material coating region 2 to the tab 1, a strength gradually changes, without any sudden change, and a whole strength and a whole hardness of the tab 1 are also improved.

Such arrangement for the electrode plate of the battery of the embodiments is adopted, so that a deformation resistance ability (such as tension resistance or compression resistance) at the junction between the tab 1 and the active material coating region 2 or even of the whole tab 1 is significantly improved, which may effectively prevent the tab 1, in a manufacturing process of a battery after die-cut forming, from wrinkling or cracking at the junction due to force influence, thereby effectively preventing a hidden danger of causing failure of a battery due to wrinkling or cracking of the tab 1, and thus improving safety of a battery, also improving an electrochemical quality of a battery, and ensuring an effective use life of a battery.

Compared with directly extending an active material layer onto the tab 1 at the junction between the active material coating region 2 and the tab 1, forming the coating transition region 11 coated with active material at the junction between the active material coating region 2 and the tab 1 may enhance a stress and a strength at the junction. The first treating area 111 is provided at the edge of the side of the coating transition region 11, and the thickness of the current collector in the first treating area 111 is greater than the thickness of the current collector in the other areas of the coating transition region 11. The thickness of the first treating area 111 is increased, so that a strength and a hardness of the first treating area 111 are improved to a certain extent, thus an edge at the junction is a hard edge having a relatively high strength, thereby significantly improving a strength and a hardness at the junction between the active material coating region 2 and the tab 1. Moreover, in the direction from the active material coating region 2 to the tab 1, the width of the first treating area 111 gradually increases, which significantly decreases a difference in stresses on the active material coating region 2 and on the tab 1, and a degree of a sudden change in strength at the junction between the active material coating region 2 and the tab 1, and also improves a force resistance ability and a compression resistance ability of the tab 1, thereby effectively preventing the tab 1, in a manufacturing process of a battery after die-cut forming, from wrinkling or cracking at the junction, and thus effectively preventing a hidden danger of failure of a battery, improving safety of a battery, and also improving a quality of a battery.

Within the coating transition region 11, in the direction from the active material coating region 2 to the foil uncoating region 10, a thickness of an active material gradually decreases, and the coating transition region 11 may also be called as an active material decreasing region.

Further, on the basis of having the first treating area 111, an inner side of an edge of the coating transition region 11 is further provided with an influencing area (it is necessary to be emphasized that the inner side refers to an inner side in a direction from outside of the edge to inside of the edge, ditto hereinafter), denoted as a first influencing area 112. The first influencing area 112 is an inactive area, i.e. an area that cannot conduct electricity effectively. An area, on an inner side of the first influencing area 112, of the coating transition region 11 is called as a first basic area. As shown in FIG. 7, from inside to outside in sequence, the coating transition region 11 includes the first basic area, the first influencing area 112 and the first treating area 111. The first influencing area 112 includes an active material layer having an appearance color different from an appearance color of an active material layer in the first basic area, and is an active material color changing area.

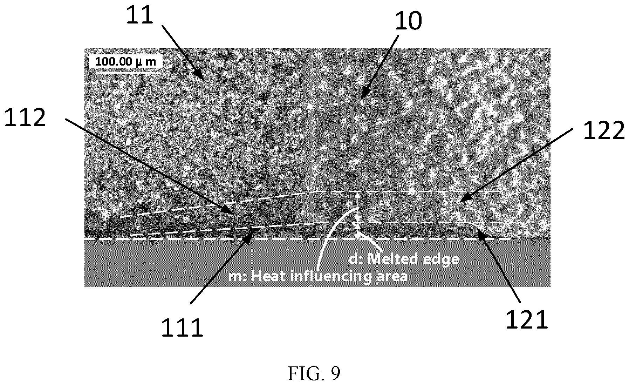

In some embodiments, the first treating area 111 is an area formed after an edge is melted and then solidifies into shape, which forms a sintered edge or a melted edge of the tab 1, i.e., the first treating area 111 is formed by melting and then solidifying into shape, such as a sintered area formed by laser-cutting a foil. The first treating area 111 is melted and then cools, i.e., the first treating area 111 has undergone a quenching process, thereby significantly improving a strength and a hardness of the first treating area 111. As shown in FIG. 9, there is substantially no burr on the first treating area 111, and thus also eliminating a hidden factor of causing failure of a battery due to burrs piercing a separator of a battery, also improving safety of a battery, and ensuring an effective use life of a battery.

The first influencing area 112 may be considered as an area formed after being heated at a high temperature without melting. The first influencing area 112 is formed by heating at a high temperature and then cooling, and a strength of a current collector in the first influencing area 112 is greater than or equal to a strength of a current collector in the first basic area without temperature influence. Adopting such an arrangement may further enhance a strength at the junction between the tab 1 and the active material coating region 2, i.e. a whole strength of the connection end of the tab 1 is enhanced, so as to more effectively ensure that the tab 1 does not crack, or wrinkle at the junction when subjected to a significant rolling pressure.

An edge (i.e. at an end, away from the active material coating region 2, of the tab 1) of the foil uncoating region 10 is provided with a second treating area 121. The foil uncoating region 10 includes three outer sides connected circumferentially in sequence. The second treating area 121 is provided at the edge of each of the three outer sides. An inner side of the second treating area 121 is also provided with an influencing area, denoted as a second influencing area 122. A thickness of a current collector in the second treating area 121 is greater than or equal to a thickness of a current collector in the second influencing area 122, and is also greater than or equal to a thickness of a current collector in other areas of the foil uncoating region 10.

For example, the second treating area 121 is also an area formed after an edge is melted and then solidifies into shape, which forms a sintered edge or a melted edge of the tab 1. For example, the second treating area 121 is a sintered area formed by laser-cutting a foil. As shown in FIG. 9, there is substantially no burr on the second treating area 121, and thus also eliminating a hidden factor of causing failure of a battery due to burrs piercing a separator of a battery. A strength of the current collector in the second influencing area 122 is greater than or equal to a strength of a current collector in an area (which may be denoted as a second basic area), on an inner side of the second influencing area 122, of the foil uncoating region 10. The second influencing area 122 may be an area formed due to influence at a high temperature.

As the whole tab 1 includes the junction between the tab 1 and the active material coating region 2 (i.e. the first treating area 111) and the second treating area 121, and an edge of each side is a hard edge having a relatively high strength, a strength of the whole edge of the tab 1 is improved significantly and uniformly, thereby effectively improving a force resistance ability and transformation resistance performance of the tab 1, and making the edge of the whole tab 1 have no burrs.

During specific production, each of the first treating area 111, the first influencing area 112, the second treating area 121 and the second influencing area 122 is an area formed after being processed through a certain production step. The first treating area 111 and the second treating area 121 may be sintered areas, such as sintered edges formed after laser-cutting treatment, or melted edges formed due to influence at a high temperature. Each of the first influencing area 112 and the second influencing area 122 is an area being influenced at a high temperature but not melted.

It should be understandable that in the embodiments of the present application, when a foil in a certain area is coated with an active material layer, a thickness of this area refers to a sum of a thickness of the foil and a thickness of the active material layer, and a thickness of a current collector in this area refers to a thickness of the foil; and when a foil in a certain area is not coated with an active material layer, a thickness of this area refers to a thickness of the foil, or may be understood as a thickness of a current collector.

As the first treating area 111 is a sintered edge formed after laser-cutting treatment, or a melted edge formed due to influence at a high temperature, an active material layer in the first treating area 111 substantially disappears after the laser-cutting treatment or high-temperature treatment. Thus, the thickness of the current collector in the first treating area 111 may be equivalent to or substantially equivalent to the thickness of the first treating area 111, which is greater than or equal to the thickness of the current collector in the other areas on an inner side of an edge of the coating transition region 11. The first treating area 111 has an upper surface flush with or protruding from an upper surface of the other areas of the coating transition region 11, and the first treating area 111 has a lower surface flush with or protruding from a lower surface of the other areas of the coating transition region 11.

Similarly, the thickness of the current collector in the second treating area 121 is greater than or equal to the thickness of the other areas on an inner side of an edge of the foil uncoating region 10. The second treating area 121 has an upper surface flush with or protruding from an upper surface of the other areas of the foil uncoating region 10, and the second treating area 121 has a lower surface flush with or protruding from a lower surface of the other areas of the foil uncoating region 10. The upper surface and the lower surface refer to two surfaces in a thickness direction.

In some embodiments, the thickness T1 of the first treating area 111 is less than or equal to the thickness T2 of the second treating area 121.

In some embodiments, the thickness T2 of the second treating area 121 is less than or equal to the thickness T3 at the junction between the first treating area 111 and the second treating area 121.

As the thickness of the current collector in the first treating area 111 may be equivalent or substantially equivalent to the thickness of the first treating area 111, T1 may be considered as the thickness of the current collector in the first treating area 111, and T3 may be considered as the thickness of the current collector at the junction. As a foil in the second treating area 121 is not coated thereon with an active material layer, T2 may be considered as the thickness of the current collector in the second treating area 121.

An average thickness of the current collectors of the electrode plate of the battery is denoted as T. It should be understandable that the average thickness of the current collectors is an average value of thicknesses of the current collectors on the whole electrode plate of the battery. A relation between T, T1, T2 and T3 may be described by the following expression.

In some embodiments, the average thickness T of the current collectors of the electrode plate of the battery < the thickness T1 of the first treating area 111 ≤ 1.08 times the average thickness T of the current collectors of the electrode plate of the battery.

In some embodiments, 1.01 times the average thickness T of the current collectors of the electrode plate of the battery ≤ the thickness T3 at the junction between the first treating area 111 and the second treating area 121 ≤ 1.15 times the average thickness T of the current collectors of the electrode plate of the battery.

In some embodiments, the average thickness T of the current collectors of the electrode plate of the battery < the thickness T1 of the first treating area 111 ≤ the thickness T2 of the second treating area 121 ≤ the thickness T3 at the junction between the first treating area 111 and the second treating area 121 ≤ 1.2 times the average thickness T of the current collectors of the electrode plate of the battery.

The average thickness T of the current collectors of the electrode plate of the battery is less than or equal to 50 µm, such as 10 µm, 20 µm, 30 µm, 35 µm, 40 µm, 45 µm, or 50 µm.

Structural features of the treating areas and the influencing areas are exemplarily introduced by specific value ranges. In some embodiments, the width of the first treating area 111 is less than or equal to 100 µm, such as 30 µm, 40 µm, 50 µm, 60 µm, 65 µm, 70 µm, 75 µm, 80 µm, 85 µm, 90 µm, 95 µm, or 100 µm.

In some embodiments, the width of the first influencing area 112 is less than or equal to 100 µm, such as 30 µm, 40 µm, 50 µm, 60 µm, 65 µm, 70 µm, 75 µm, 80 µm, 85 µm, 90 µm, 95 µm, or 100 µm.

In some embodiments, the width of the second treating area 121 is greater than the width of the first treating area 111.

In some embodiments, the width of the second treating area 121 is less than or equal to 150 µm, such as 30 µm, 40 µm, 50 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, or 150 µm.

In some embodiments, the width of the second influencing area 122 is greater than the width of the first influencing area 112.

In some embodiments, the width of the second influencing area 122 is less than or equal to 100 µm, such as 30 µm, 40 µm, 50 µm, 60 µm, 65 µm, 70 µm, 75 µm, 80 µm, 85 µm, 90 µm, 95 µm, or 100 µm.

The current collector of the electrode plate of the battery is an Al foil or a Cu Foil. For example, the current collector is the Al foil, the electrode plate of the battery may be a positive electrode plate and the tab 1 is a positive tab 1. In another example, the current collector is the Cu foil, the electrode plate of the battery may be a negative electrode plate and the tab 1 is a negative tab 1. Certainly, in other embodiments, the current collector of the electrode plate of the battery may be other metal foils, such as stainless steel plated on its surface with C, Ni, Ti or Ag, or Al-Cd alloy plated on its surface with C, Ni, Ti or Ag, etc.

In some embodiments, the electrode plate of the battery is a laser-cut piece. After laser cutting, the above-described first treating area 111 and the above-described first influencing area 112 are provided at the edge (i.e. the edge of the coating transition region 11) of the junction between the tab 1 and the active material coating region 2, and the second treating area 121 and the second influencing area 122 are provided at the edge of the foil uncoating region 10. Certainly, in other embodiments, the first treating area 111 and the second treating area 121 may also be formed by other formation manners. For example, in short, after die-cut forming of the tab 1 and the active material coating region 2, the edge is heated at a high temperature to melt an edge area, and then the edge area cools and solidifies to form the treating area.

The first treating area 111 is further provided therein with a melted bead. In some embodiments, a diameter of the melted bead is less than or equal to 45 µm.

In some embodiments, an edge of the active material coating region 2 is further provided with a treating area which may be called as a third treating area. In combination with the above embodiments, the edge of the whole electrode plate of the battery is provided with the treating area, thereby increasing a strength and a hardness of the edge of the whole electrode plate, and thus significantly improving a whole deformation resistance ability of an electrode plate, preventing an electrode plate from wrinkling, also preventing formation of burrs on an edge of a whole electrode plate, and significantly improving a quality and safety of a battery.

**In** another embodiment of the present application, a battery cell is further provided. The battery cell includes an electrode plate of a battery. The battery cell may be formed by winding two electrode plates of a battery or may be formed by stacking a plurality of electrode plates of a battery. The electrode plate of the battery is the electrode plate of the battery as described in the above embodiments. There is substantially no burr on the edge of the tab 1 of the battery cell or on the edge of the whole electrode plate of the battery, and a strength at the junction between the tab 1 and an active material coating region 2 is enhanced, thereby reducing a risk of failure of a battery and improving an electrochemical quality and use safety of a battery.

**In** another embodiment of the present application, a battery is further provided, including the battery cell in the above embodiments, or including the electrode plate of the battery in the above embodiments. Compared with adopting the batteries in the related technologies, adopting the battery reduces a risk of failure and eliminates a hidden factor of affecting a quality of a battery or causing failure of a battery due to burrs piercing a separator of a battery, and cracking or wrinkling at a junction between a tab and an active material coating region, thereby improving an electrochemical quality and use safety. The conclusion process for the beneficial effects of the above battery cell and the above battery is substantially same as that of the above electrode plate of the battery, and may not be repeated any more.

The basic principles of the present application are described above with reference to the specific embodiments, but it should be noted that the advantages, the benefits, the effects, and the like mentioned in the present application are merely exemplary rather than limiting, and it should not be assumed that these advantages, benefits, effects, and the like are essential for every embodiment of the present application. **In** addition, the specific details disclosed above are only for illustrative and comprehension purposes, not for limiting purposes, and the above-mentioned details are not intended to limit the present application to be implemented by using the specific details above.

The components or the apparatuses involved in the present application are merely provided as illustrative examples and are not intended to require or imply that the components or the apparatuses must be connected, arranged, or configured shown in the accompanying drawings. As will be appreciated by a person skilled in the art, the components or the apparatuses may be connected, arranged, or configured in any manner. The terms such as "including", "containing", "having", and the like are open-ended terms that mean "including but not limited to", which may be interchanged with each other. The terms "or" and "and" used herein refer to the term "and/or", which may be interchanged with each other, unless the context clearly dictates otherwise. The term "such as" used herein refers to the phrase "such as, but not limited to", which may be interchanged with each other.

It should also be noted that, in the apparatus or the device of the present application, the components may be decomposed and/or recombined. Such decomposition and/or recombination should be considered as equivalent solutions of the present application.

The above descriptions of the disclosed aspects are provided to enable any person skilled in the art to make or use the present application. Various modifications to these aspects will be readily apparent to a person skilled in the art, and the generic principles defined herein may be applied to other aspects without departing from the scope of the present application. Thus, the present application is not intended to be limited to the aspects shown herein, but is to be accorded the broadest scope consistent with the principles and novel features disclosed herein.

It should be understood that the terms "first", "second" and "third" used in the description of the embodiments of the present application are merely used to describe the technical solutions more clearly, and cannot be used to limit the protection scope of the present application.

The above descriptions have been presented for purposes of illustration and description. Moreover, such descriptions are not intended to limit the embodiments of the present application to the forms disclosed herein. While various example aspects and embodiments have been discussed above, a person skilled in the art will recognize certain variations, modifications, changes, additions, and sub-combinations thereof.

The above are only preferred embodiments of the present application and are not intended to limit the present application, and any modification, equivalent replacement, etc. made within the spirit and the principles of the present application shall fall within the protection scope of the present application.

## Claims

1. An electrode plate of a battery, comprising an active material application region and a tab, wherein the tab comprises a foil uncoating region, and the active material coating region comprises a current collector and an active material layer provided on the current collector; and the foil uncoating region comprises three outer sides, a second treating area is provided at an edge of at least one of the three outer sides, and a thickness of the second treating area is greater than or equal to a thickness of other areas, excluding the second treating area, of the foil uncoating region.

2. The electrode plate of the battery according to claim 1, wherein the tab further comprises a coating transition region having an active material layer connected to the active material coating region; and
a first treating area is provided at an edge of a side of the coating transition region, a thickness of a current collector in the first treating area is greater than or equal to a thickness of a current collector in other areas, excluding the first treating area, of the coating transition region, and the second treating area is connected to the first treating area.

3. The electrode plate of the battery according to claim 2, wherein in a direction from the coating transition region to the foil uncoating region, a width of the first treating area gradually increases.

4. The electrode plate of the battery according to claim 2 or 3, wherein the coating transition region is further provided with a first influencing area on an inner side of the first treating area, and the first influencing area is an inactive area.

5. The electrode plate of the battery according to claim 4, wherein the foil uncoating region is further provided with a second influencing area on an inner side of the second treating area, and the thickness of the second treating area is greater than or equal to a thickness of the second influencing area.

6. The electrode plate of the battery according to any one of claims 2 to 5, wherein a width of the first treating area is less than or equal to 100 µm.

7. The electrode plate of the battery according to claim 4 or 5, wherein a width of the first influencing area is less than or equal to 100 µm.

8. The electrode plate of the battery according to any one of claims 2 to 7, wherein a width of the second treating area is greater than a width of the first treating area.

9. The electrode plate of the battery according to claim 5, wherein a width of the second influencing area is greater than a width of the first influencing area.

10. The electrode plate of the battery according to any one of claims 1 to 9, wherein a width of the second treating area is less than or equal to 150 µm.

11. The electrode plate of the battery according to claim 5, wherein a width of the second influencing area is less than or equal to 100 µm.

12. The electrode plate of the battery according to any one of claims 2 to 9 and 11, wherein the thickness of the second treating area is greater than or equal to a thickness of the first treating area.

13. The electrode plate of the battery according to any one of claims 2 to 9, 11 and 12, wherein a thickness at a junction between the first treating area and the second treating area is greater than or equal to the thickness of the second treating area.

14. The electrode plate of the battery according to any one of claims 2 to 9 and 11 to 13, wherein a thickness of the first treating area is greater than an average thickness of the current collectors of the electrode plate of the battery, and is less than or equal to 1.08 times the average thickness of the current collectors of the electrode plate of the battery.

15. The electrode plate of the battery according to any one of claims 2 to 9 and 11 to 14, wherein a thickness at a junction between the first treating area and the second treating area is greater than or equal to 1.01 times an average thickness of the current collectors of the electrode plate of the battery, and is less than or equal to 1.15 times the average thickness of the current collectors of the electrode plate of the battery.

16. The electrode plate of the battery according to any one of claims 2 to 9 and 11 to 15, wherein a thickness of the first treating area is greater than an average thickness of the current collectors of the electrode plate of the battery, and is less than or equal to the thickness of the second treating area, and a thickness at a junction between the first treating area and the second treating area is greater than or equal to the thickness of the second treating area, and is less than or equal to 1.2 times the average thickness of the current collectors of the electrode plate of the battery.

17. The electrode plate of the battery according to any one of claims 1 to 16, wherein an average thickness of the current collectors of the electrode plate of the battery is less than or equal to 50 µm.

18. The electrode plate of the battery according to any one of claims 2 to 9 and 11 to 16, wherein the first treating area is provided therein with a melted bead having a diameter less than or equal to 45 µm.

19. The electrode plate of the battery according to any one of claims 1 to 18, wherein the second treating area is provided at the edge of each of the three outer sides.

20. The electrode plate of the battery according to any one of claims 1 to 19, wherein the tab comprises a first foil face, a second foil face, and a side surface extending in a thickness direction, and the second treating area comprises an area extending along the first foil face, an area extending along the second foil face, and an area extending along the side surface.

21. The electrode plate of the battery according to any one of claims 1 to 20, wherein the thickness of the second treating area is 1 to 3 times the thickness of the other areas, excluding the second treating area, of the foil uncoating region.

22. The electrode plate of the battery according to any one of claims 1 to 21, wherein the thickness of the second treating area ranges from 30 µm to 100 µm.

23. The electrode plate of the battery according to any one of claims 1 to 22, wherein a third treating area is provided at an edge of an outer side of the active material coating region, and the third treating area is an inactive area.

24. The electrode plate of the battery according to any one of claims 1 to 23, wherein a foil of the electrode plate of the battery is Al or Cu.

25. An electrode plate of a battery, comprising an active material coating region and a tab, wherein the tab comprises a coating transition region and a foil uncoating region, and the active material coating region comprises a current collector and an active material layer provided on the current collector; the coating transition region comprises an active material layer connected to the active material coating region; and
a first treating area is provided at an edge of a side of the coating transition region, a thickness of a current collector in the first treating area is greater than or equal to a thickness of a current collector in other areas, excluding the first treating area, of the coating transition region, and in a direction from the coating transition region to the foil uncoating region, a width of the first treating area gradually increases.

26. A battery cell, comprising the electrode plate of the battery according to any one of claims 1 to 25.

27. A battery, comprising the battery cell according to claim 26.
